Europäisches Patentamt

(19) European Patent Office

Office européen des brevets

(11) Numéro de publication: **0 145 508**
A2

(12) **DEMANDE DE BREVET EUROPEEN**

(21) Numéro de dépôt: **84401673.3**

(22) Date de dépôt: **14.08.84**

(51) Int. Cl.⁴: **A 01 G 9/22,** A 01 G 9/14

(30) Priorité: **19.08.83 CA 435006**

(43) Date de publication de la demande: **19.06.85**
**Bulletin 85/25**

(84) Etats contractants désignés: **AT BE CH DE FR GB IT LI
LU NL SE**

(71) Demandeur: **LES LABORATOIRES UPSILON D.B. INC.,
454 De Sales, Chicoutimi Québec, G7H 4C4 (CA)**

(72) Inventeur: **Bonneau, Denis, 454 De Sales, Chicoutimi
(Québec) G7H 4C4 (CA)**

(74) Mandataire: **CABINET BONNET-THIRION, 95 Boulevard
Beaumarchais, F-75003 Paris (FR)**

(54) **Système de toit escamotable pour serre.**

(57) Toit d'abri du type comprenant und charpente externe (C) ayant deux assises latérales (A, A'), une toile (T) et un dispositif permettant de suspendre la toile à la charpente externe, sous celle-ci, permettant de la déployer pour former un abri entre les deux assises à partir d'une position pliée de la toile à l'une des assises et permettant de la ramener dans ladite position pliée. Le toit comporte plusieurs câbles parallèles (7) formant rails, disposés transversalement entre les assises (A, A') et des pièces allongées (9) fixées, à une extrémité, à la charpente externe (C) et, à l'autre extrémité, aux rails (7) de façon à les relier à la charpente tout en leur donnant la forme générale d'arches. Des poulies primaires (5) et secondaires (3) sont montées sur les rails (7) pour y rouler entre les assises. Chaque poulie (3, 5) a deux cônes rotatifs (17) formant une gorge permettant aux cônes de reposer sur le rail, un espace (19) étant prévu entre les cônes (17) pour le passage des pièces allongées (9). Les poulies secondaires (3), d'autre part, sont munies d'agrafes permettant la fixation de la toile (T) en des points répartis de celle-ci de façon à en permettre le déploiement et le pliage. Pour chaque rail (7), on a prévu un câble de liaison (23) entraînant les poulies et fixé, à une extrémité, à la charpente (C) de l'autre côté de l'assise, ce câble (23) reliant entre elles les poulies (3, 5) et sa longueur entre les poulies étant inférieure à la longueur de la toile entre les poulies. Les poulies primaires (5), en position pliée de la toile, sont distribuées le long des rails. Enfin, une corde de traction (43) permet de tirer les poulies (3, 5) à la suite les unes des autres, dans un sens ou dans l'autre, pour déployer ou plier la toile (T).

1
## SYSTEME DE TOIT ESCAMOTABLE POUR SERRE

La présente invention est relative à un toit d'abri, en général, et plus particulièrement à un toit de serre.

Le toit, selon l'invention, est du type comprenant une charpente externe ayant deux assises latérales, une toile et des moyens pour suspendre la toile à la charpente, sous celle-ci, permettant de la déployer pour former un abri entre les assises à partir d'une position pliée de la toile à l'une des assises et permettant de la ramener dans ladite position pliée.

Le toit selon l'invention se présente donc sous la forme d'un grand tunnel délimitant une serre.

Les toits du type mentionné ci-dessus sont déjà connus mais les systèmes de déploiement et de pliage de la toile sont compliqués et donc coûteux. Pour cette même raison, la manipulation de la toile, pour la déployer ou la plier, est difficile et parfois incertaine, se bloquant en cours de manipulation.

L'objet principal de l'invention est donc de remédier à ces inconvénients et, pour ce faire, le toit d'abri selon la présente invention et qui est revendiqué ici est caractérisé en ce qu'il comporte : au moins deux câbles parallèles formant rails, disposés transversalement entre les deux assises et des pièces allongées fixées, à une extrémité, à la charpente externe et, à l'autre extrémité, aux rails de façon à les relier à la charpente tout en leur donnant la forme générale d'arches ; des poulies primaires et secondaires montées sur les rails pour y rouler entre les assises, chaque poulie comportant deux cônes rotatifs formant une gorge permettant aux cônes de reposer sur le rail respectif, un espace étant prévu entre les cônes pour le passage des pièces allongées reliant les rails à la charpente externe ; les poulies secondaires comportant des moyens sous les rails, pour y fixer la toile en des points répartis de celle-ci de façon à en permettre le déploiement et le pliage ; pour chaque rail, un câble de liaison entraînant les poulies est fixé, à une extrémité, à la charpente du côté de l'autre assise ; ce câble de traction reliant entre elles les poulies et sa longueur entre les poulies étant inférieure à la longueur de la toile entre les poulies de façon à ce que l'effort de traction, lorsque les poulies sont entraînées, soit absorbé par le câble de liaison ; les poulies pri-

2

maires, en position pliée de la toile, étant distribuées le long des rails ; pour chaque rail, un dispositif de traction apte à tirer les poulies à la suite les unes des autres, dans un sens ou dans l'autre, pour déployer ou plier la toile, et des moyens d'entraînement en synchronisme desdits dispositifs de traction.

Chaque dispositif de traction, mentionné ci-dessus, peut comporter par exemple : pour chaque poulie, une fourchette ayant deux dents espacées, cette fourchette étant assujettie à la poulie correspondante ; une corde de traction formant boucle et pourvue, à intervalles déterminés, de bourrelets d'accrochage dont la largeur excède l'espace entre les dents, et un jeu de poulies montées sur la charpente et disposées pour permettre le déroulage en boucle de la corde d'entraînement, la disposition desdites poulies permettant l'engagement, en position pliée de la toile, des fourchettes des seules poulies primaires.

D'autre part, les moyens d'entraînement en synchronisme des dispositifs de traction peuvent être du type comportant : un arbre menant disposé le long et au sommet de ladite charpente ; des poulies d'entraînement, une pour chaque dispositif de traction, montées sur ledit arbre pour y être amenées en rotation ; chaque poulie comportant une jante à gorge dans laquelle la corde de traction correspondante loge en cours de traction, la gorge étant plus étroite que les bourrelets d'accrochage et étant entrecoupée de décrochements formant deux rainures diamétralement opposées destinées à emprisonner les bourrelets pour amener le déplacement en boucle de la corde de traction ; la distance entre les bourrelets étant égale à celle entre les rainures.

Les pièces allongées qui relient les rails à la charpente seront de préférence des cordelettes.

Dans une réalisation particulière et préférentielle de l'invention, la toile est constituée de deux sections reliées entre elles, chacune ayant une longueur apte à recouvrir entièrement ladite charpente ; une première section étant une feuille plastique transparente et une deuxième section étant une feuille à paroi double d'isolation, formant écran thermique.

Selon une variante de l'invention, chacune des poulies secondaires comportent un étrier formé de deux flasques sur lesquels les cônes rotatifs sont montés et une base reliant les flasques, et caractérisé en ce que les moyens fixant la toile aux poulies comportent des barres de liaison joignant les bases des poulies secondaires deux à deux dont une sur chaque rail et un dispositif de fixation amovible de la toile auxdites barres.

En ce qui concerne la charpente externe, on imaginera facilement qu'elle peut être constituée de plusieurs arches disposées parallèlement et à distances égales entre elles, chaque arche supportant un rail support de toile.

De même, chaque cordelette pourra être fixée à une arche par l'intermédiaire d'une attache comportant un boulon rotatif manuellement, le long duquel axe pourra se déplacer un anneau fileté intérieurement et pourvu d'une jante rainurée autour de laquelle la cordelette respective s'enroulera. L'axe du boulon sera alors parallèle à l'axe longitudinal de la charpente.

On aura une idée plus précise de l'invention à la lecture de la description qui suit d'une réalisation préférentielle, description qui se réfère aux dessins annexés où :

Les figures 1 à 5 sont, chacune, une vue schématique en élévation d'un toit d'abri construit selon les données de l'invention ;

La figure 6 est une vue en perspective du toit selon les figures 1 à 5, vue partiellement arrachée pour préciser les détails ;

La figure 7 est une vue en perspective, agrandie et partielle, destinée à illustrer le dispositif de soutien de la toile et son montage à la charpente du toit ;

La figure 8 est une vue en perspective partielle et agrandie illustrant le système d'entraînement du dispositif servant à déployer et à plier la toile ;

La figure 9 est une vue longitudinale en perspective montrant un joint d'accouplement entre deux longueurs de l'arbre d'entraînement ;

La figure 10 est une vue en perspective d'une butée d'arrêt pour les poulies ;

La figure 11 montre, d'une part, une vue en élévation d'une poulie supportant la toile ainsi qu'une vue éclatée des différentes pièces constituantes de ladite poulie.

En se référant aux dessins, le toit d'abri tel qu'illustré comprend une charpente externe C constituée de plusieurs arches 1 (au moins deux) fixées à leur base sur des assises A, A' de toutes manières connues.

Les arches 1 sont disposées parallèlement et à distances égales entre elles d'un bout à l'autre de l'abri.

Une toile T est prévue sous la charpente C de même que des moyens, qui seront précisés ci-après, pour suspendre la toile T à la charpente externe C. Ces moyens permettent, comme on le verra ci-après, de déployer la toile T pour former un abri entre les deux assises à partir d'une position pliée à l'assise A jusqu'à une position déployée à l'assise A'. Ces mêmes moyens permettent de ramener la toile T à la position pliée à l'assise A.

Pour ce faire, la toile T est montée sur un jeu de poulies secondaires 3 précédées de trois poulies primaires 5, ce nombre pouvant toutefois varier selon la largeur du toit.

Les poulies 3, 5 sont montées pour rouler sur des câbles (au moins 2) parallèles formant rails 7 et disposées transversalement entre les assises A,A'. Les rails 7 sont suspendus à la charpente C au moyen de pièces allongées 9 qui peuvent prendre la forme de cordelettes et qui sont fixées, à une extrémité, à la charpente externe C et, à l'autre extrémité, aux rails 7. La longueur des cordelettes 9 est déterminée de façon à donner aux rails 7 une forme généralement arquée.

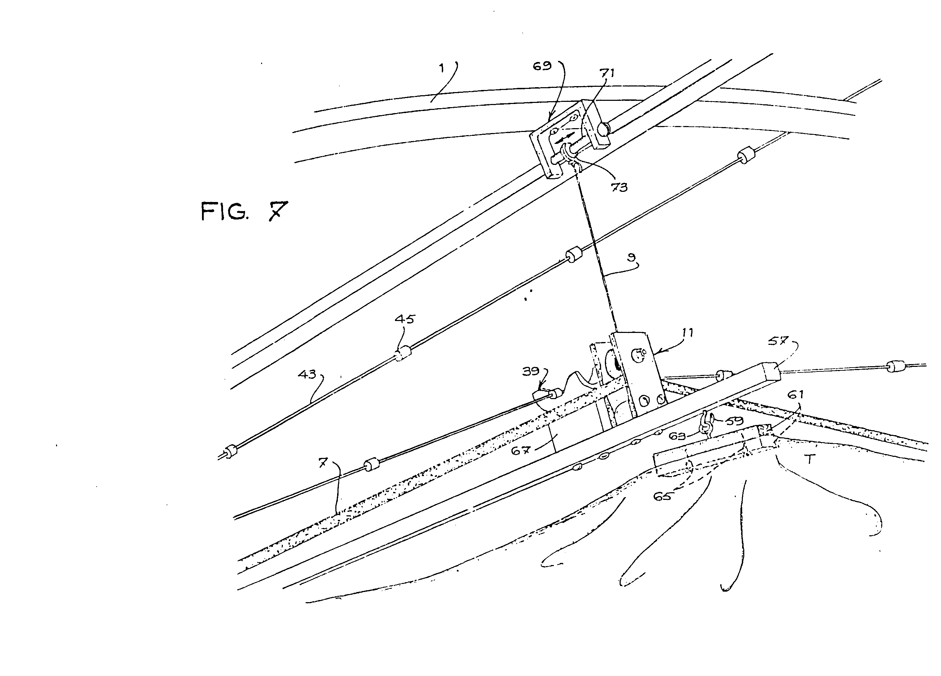

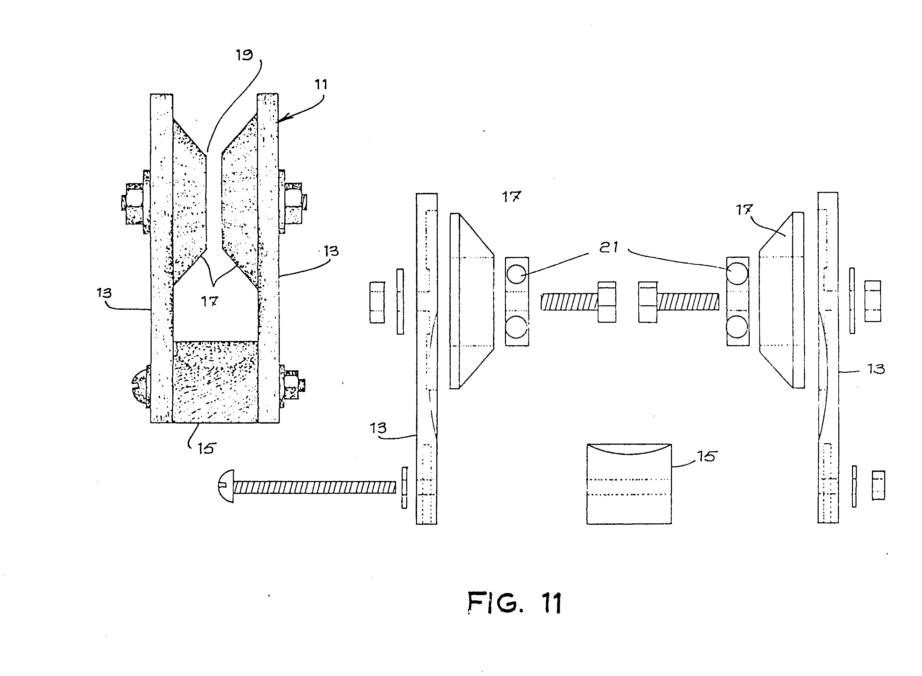

Comme le montrent les figures 7 et 11, chaque poulie (primaire ou secondaire) comporte un étrier 11 formé de deux flasques 13 reliés à la partie inférieure par une base 15. Deux cônes 17 sont montés rotatifs à l'intérieur des flasques 13 formant ainsi une gorge qui, comme on le verra ci-après, reposera sur un rail 7. On laisse un espace 19 entre les faces en regard des cônes 17 pour le passage des cordelettes 9. La figure 11 illustre, du côté droit, la façon très conven-

0145508

5

tionnelle dont les flasques 13 et la base 15 sont assemblés de même que la façon dont les cônes 17 sont montés rotatifs, au moyen de roulements à billes 21, à l'intérieur des flasques 13, sans qu'il soit nécessaire de donner plus de précision à ce sujet.

Les poulies secondaires 5 comportent des moyens, qui seront décrits plus en détail ci-après, sous les rails 7 pour y fixer la toile T en des points de celle-ci répartis de façon à en permettre le déploiement et le pliage.

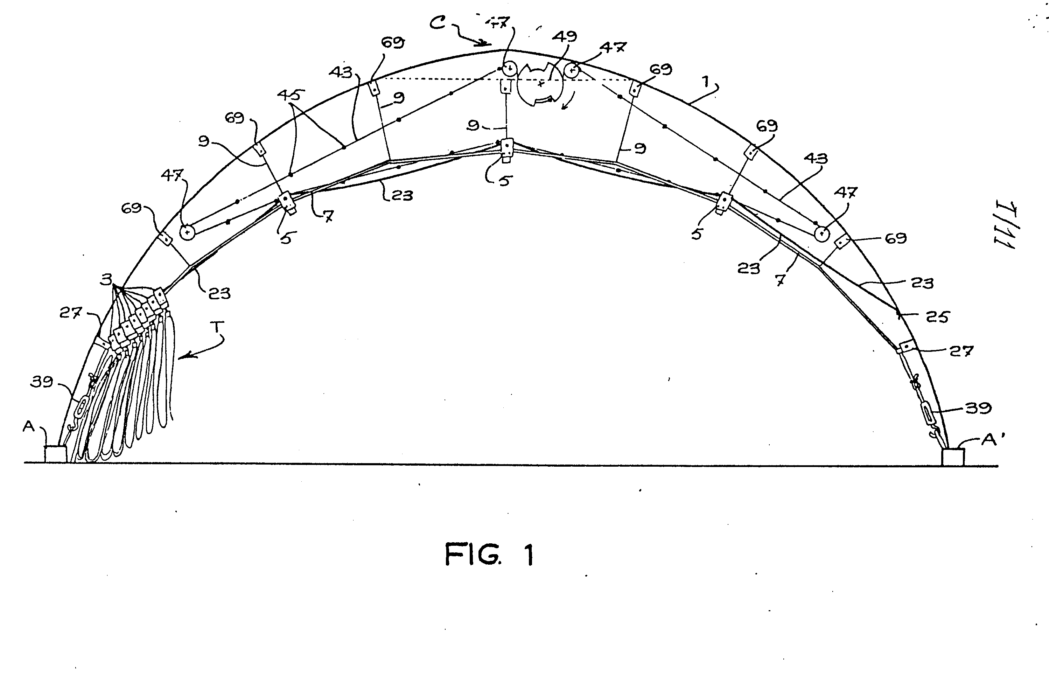

On prévoit, pour chaque rail 7, un câble de liaison 23 destiné à entraîner les poulies 5 et 3 et fixé, à une extrémité 25, à la charpente C du côté de l'assise A'. Ce câble 23 relie entre elles les poulies 5 et 3 et sa longueur entre les poulies est inférieure à la longueur de la toile entre les poulies de façon à ce que l'effort de traction, lorsque les poulies sont entraînées de la façon qu'il sera précisé ci-après, soit absorbé par le câble de liaison 23. On notera, sur la figure 1, que les poulies 3 en position pliée de la toile T se trouvent toutes du côté de l'assise A alors que les poulies primaires 5 sont distribuées le long du rail 7.

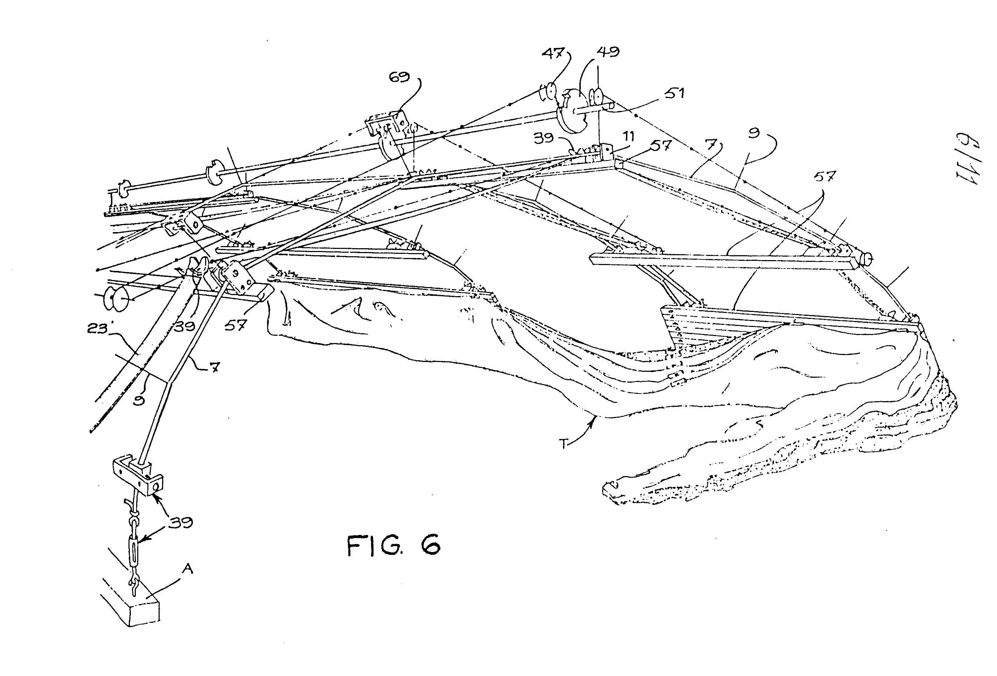

En raison de ce qui précède, il devient évident que si l'on parle d'un câble de liaison 23, ce câble peut être aussi formé par une succession de portions de câble. De plus, le mot câble doit être pris dans son sens large qui inclut évidemment l'usage de bandes 23' (voir la figure 6) étroites et souples qui peuvent elles-mêmes être constituées d'une succession de longueurs s'étendant entre poulies successives.

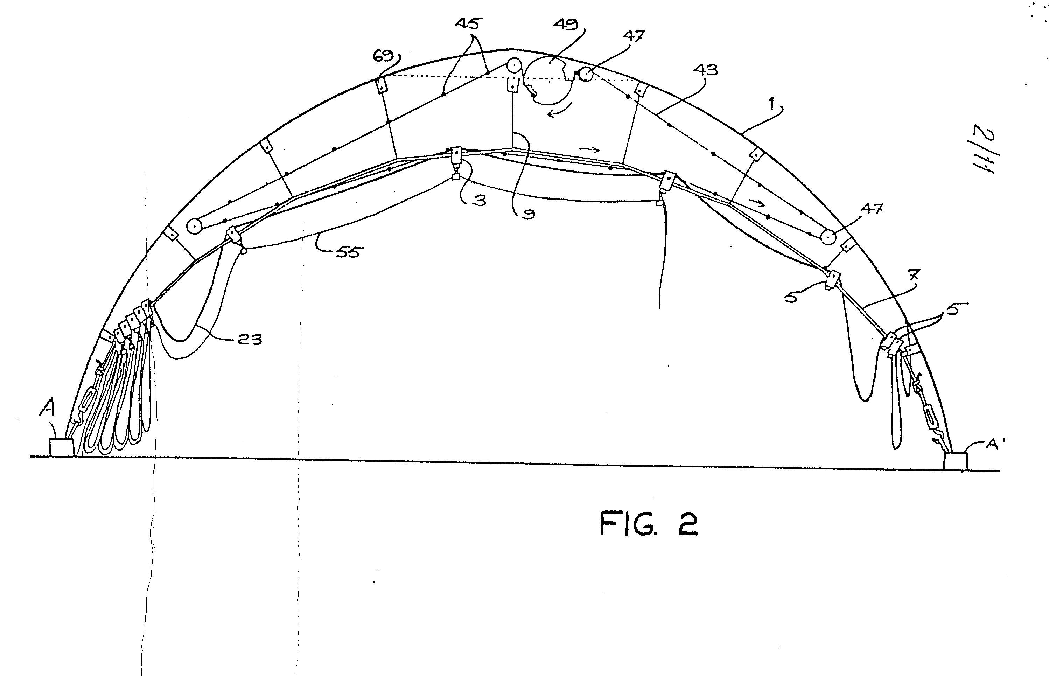

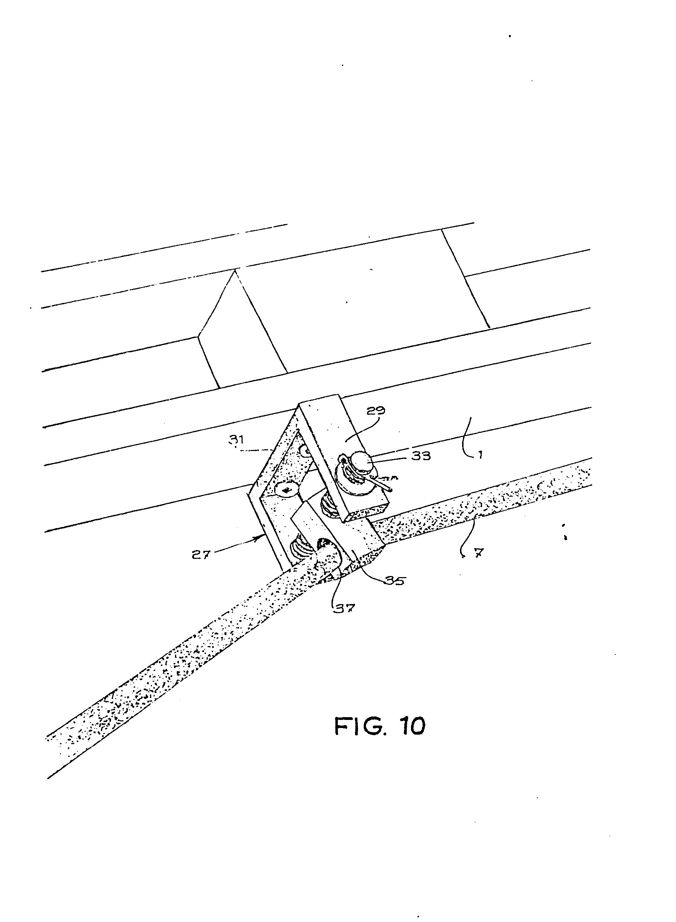

Comme le montrent les figures 1 à 5, les poulies 3, 5 s'accumulent de chaque côté des assises A, A' en s'arrêtant sur des butées 27 fixées sous les arches 1. La figure 10 illustre une butée d'arrêt 27 constituée d'une chape en U inversé 29 dont l'anse 31 est fixé de toute façon connue sous une arche 1, l'autre extrémité de la chape recevant un boulon 33 sur lequel est monté en pivotement un bloc 35 au travers duquel on a prévu un trou 37 dont l'alésage est supérieur au diamètre du rail 7 de façon à ce que le bloc 35 puisse coulisser librement sur le rail 7.

Les deux extrémités de chaque rail 7 sont fixées respectivement aux assises A, A' de toute façon connue comme par exemple au moyen de tendeurs 39.

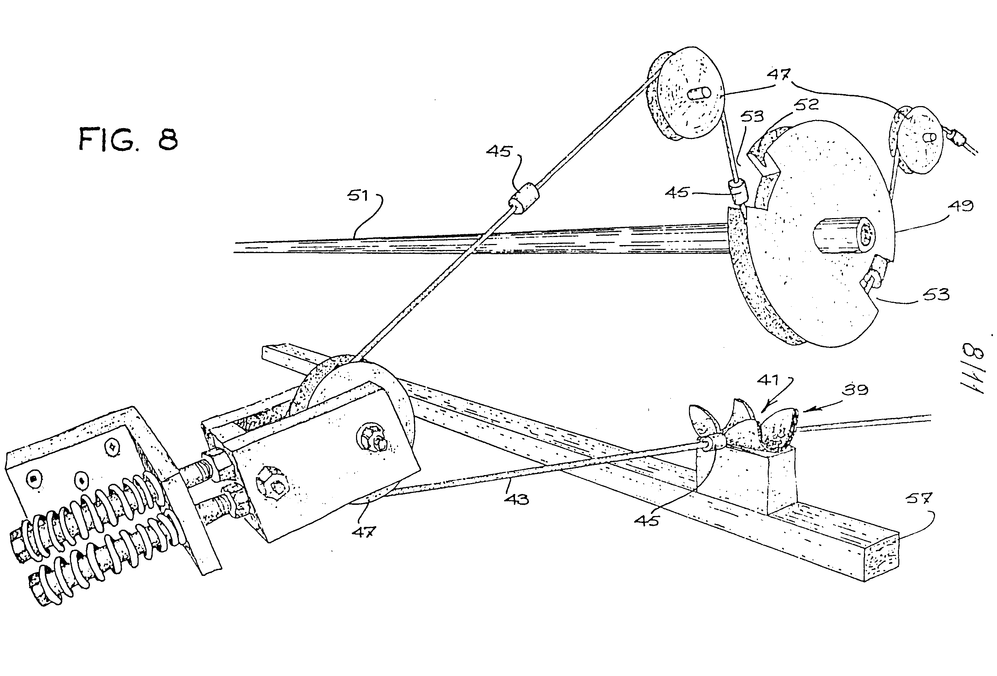

On prévoit, pour chaque rail 7, un dispositif de traction apte à tirer les poulies 5, 3 à la suite les unes des autres, dans un sens ou dans l'autre, pour déployer ou plier la toile T. Le dispositif de traction illustré comporte, pour chaque poulie, une fourchette 39 à deux dents espacées assujetties à la poulie correspondante comme il sera précisé ci-après. Comme l'illustre la figure 8, cette fourchette peut prendre la forme d'un demi-tuyau ayant une rainure transversale 41. Dans cette rainure vient se loger une corde de traction 43 formant boucle (comme l'illustrent les figures 1 à 5) et pourvue, à intervalles déterminés, de bourrelets d'accrochage 45 dont la largeur excède l'espace entre les dents, c'est-à-dire le fond de la rainure 41 comme l'illustre clairement la figure 8. Enfin, le dispositif de traction se complète par un jeu de poulies 47, 49 montées sur la charpente C et disposées pour permettre le déroulage en boucle de la corde d'entraînement, la disposition des poulies permettant l'engagement, en position pliée de la toile, des fourchettes 39 des seules poulies primaires 5, comme le montre la figure 1. On notera en passant que les poulies primaires 5 ne supportent pas la toile T.

La poulie 49 est une poulie d'entraînement de la corde de traction 43 et est fixée à un arbre 51 amené en rotation de toute façon connue pour y entraîner la poulie 49.

Chaque poulie 49 comporte une jante à gorge 52 en V dans laquelle la corde de traction 43 s'engage en cours de traction. Cette gorge 52 est plus étroite, comme le montre la figure 8, que les bourrelets d'accrochage 45 et est entrecoupée de deux décrochements diamétralement opposés formant des rainures 53 destinées, comme on le comprendra, à emprisonner les bourrelets pour amener le déplacement en boucle de la corde 43 de traction lorsque l'arbre menant 51 tourne. Il faut donc que la distance entre les bourrelets 45 soient sensiblement égale à celle entre les rainures 53.

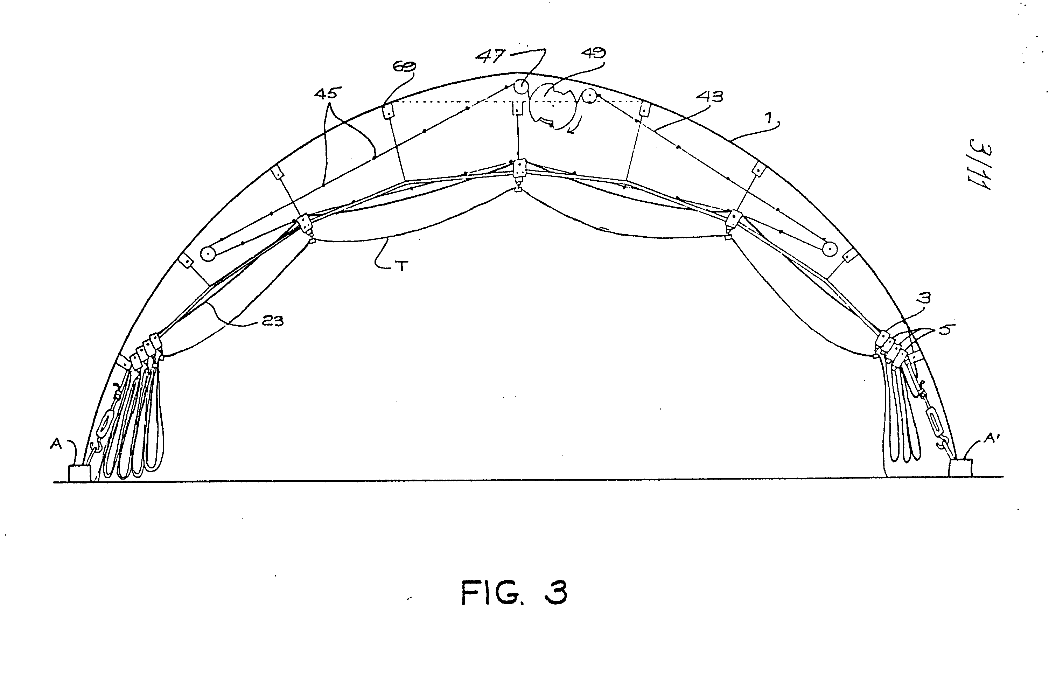

De par la description qui vient d'être faite, et se référant aux figures 1 à 5 en particulier, on comprendra facilement que lorsque la corde 43 de traction est mise en mouvement dans le sens anti-horaire, elle entraîne les poulies secondaires 5 vers l'assise A', lesquelles poulies entraînent en retour les poulies primaires 3 de par le jeu du câble 23 qui les relie. On en arrive ainsi à la position de la figure 3 où la toile T est déployée pour former un toit entre les assises A, A'. Inversement, si la rotation de l'arbre 51 est inversée, amenant l'inversion de la rotation de la poulie d'entraînement 49 et déplacement de la corde de traction 43 dans le sens horaire, les poulies primaires 3 et secondaires 5 se déplaceront alors, le long du rail 7, de la butée 27 de l'assise A' vers la butée 27 de l'assise A, le toit s'ouvrant alors.

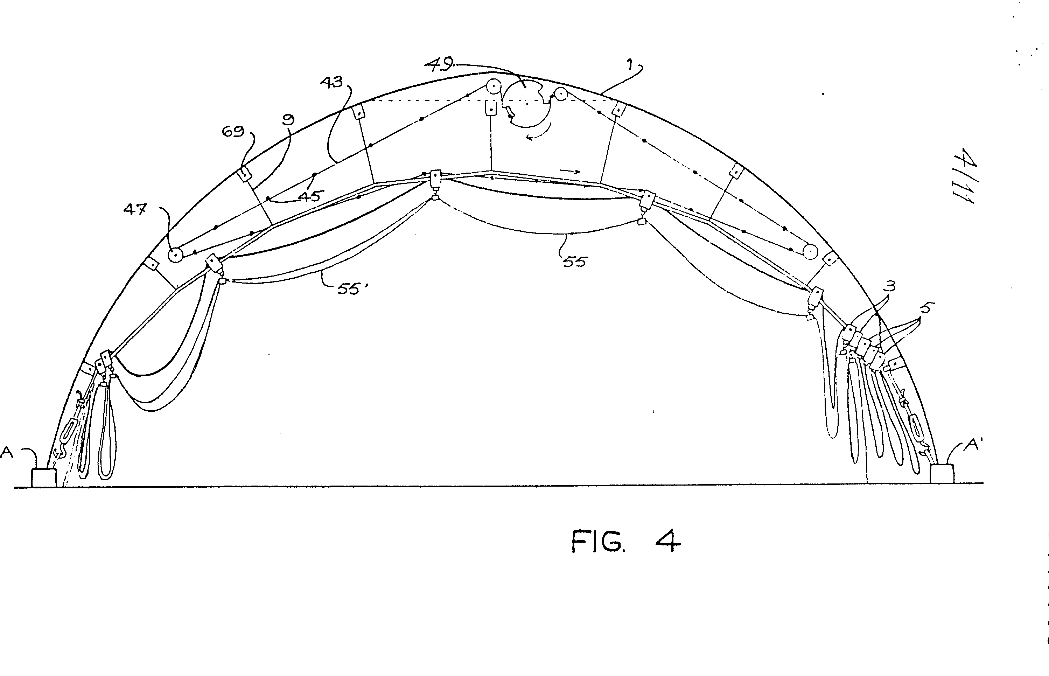

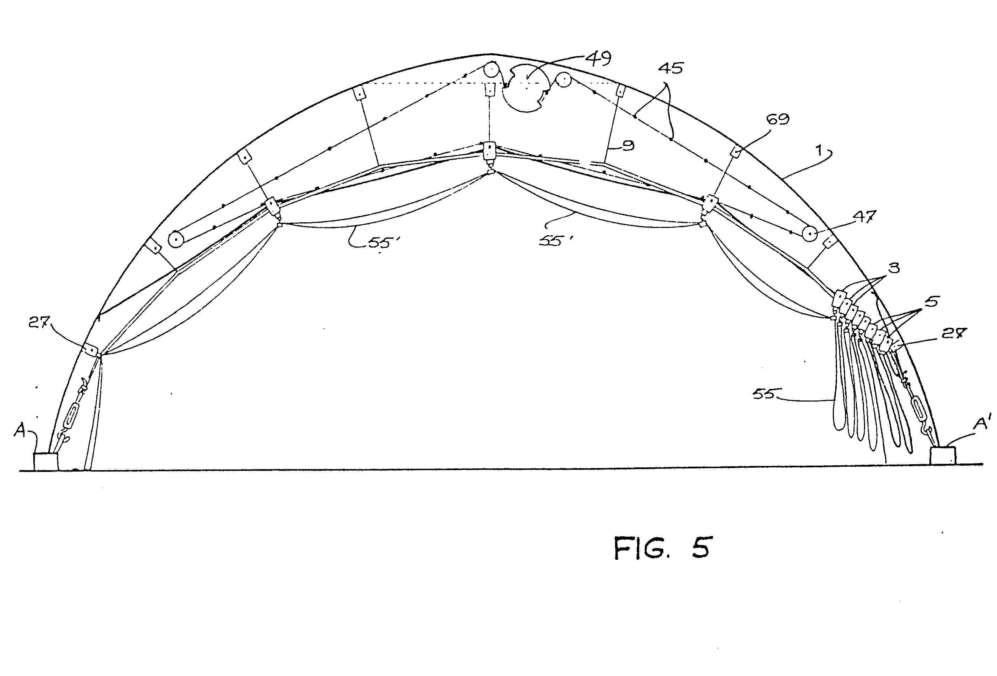

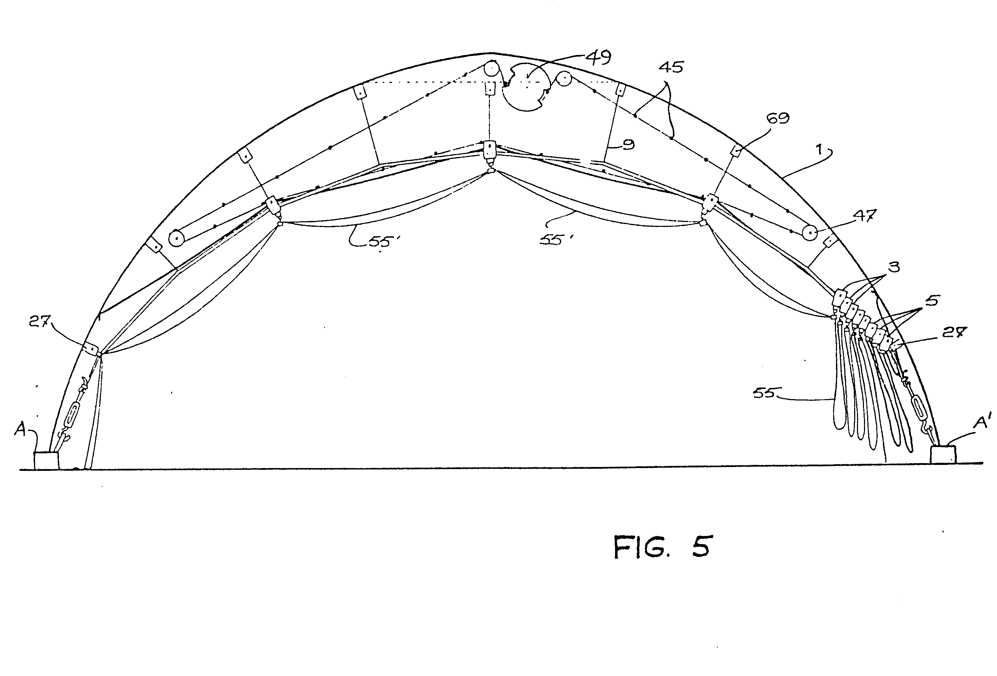

Dans la réalisation préférentielle illustrée, la toile T est constituée de deux sections successives 55, 55' (voir figures 4 et 5) reliées entre elles, chacune ayant une longueur apte à recouvrir entièrement la charpente C pour ainsi former un toit. La section 55 est une feuille plastique transparente qui peut être du polyéthylène alors que la section 55' est une feuille à paroi double d'isolation formant écran thermique. Elle est composée d'une première paroi externe qui est une feuille en matériau plastique transparent, tel le polyéthylène, alors que la deuxième paroi, sousjacente, est une feuille en matériau réflecteur, tel le mylar aluminisé. On laisse un espace d'air entre les deux parois pour former un coussin isolant.

La figure 7 illustre une façon de monter, de façon amovible, la toile T sur les poulies 3, 5.

Comme mentionné précédemment, le toit d'abri selon l'invention comporte au moins deux systèmes identiques pour obtenir le déploiement et le pliage de la toile T, les deux systèmes étant reliés par l'arbre menant 51 joignant leur poulie d'entraînement respective. On conçoit cependant qu'en général il y aura plus de deux systèmes.

Si l'on se réfère maintenant aux figures 6 et 7, on notera que chaque poulie 3, 5 d'un système est reliée à une poulie 3, 5 d'un système adjacent au moyen d'une barre de liaison 57 joignant les bases 15 des étriers 11 de chaque poulie. On prévoit, sous cette barre, des crochets 59 destinés à supporter, de façon amovible, des ensembles de deux languettes 61 pourvues d'oeillets 63 destinés à s'engager, de façon amovible comme il a été dit précédemment, dans les crochets 59. Les deux languettes sont disposées parallèlement de part et d'autre de la toile T et sont ensuite fixées ensemble de toute façon connue comme par exemple au moyen de vis 65.

On notera en passant que les fourchettes 39 sont fixées à des blocs 67 eux-mêmes assujettis à la barre de liaison 57. Il s'ensuit que les fourchettes 39 sont intégrées aux poulies 3, 5.

Comme le montre aussi la figure 7, les cordelettes 9, fixées aux rails 7 de toute façon connue, sont également fixées aux arches 1 par l'intermédiaire d'une attache 69 comportant un boulon 71 rotatif manuellement, le long duquel se déplace un anneau 73 fileté intérieurement et pourvu d'une jante rainurée autour de laquelle la cordelette 9 s'enroule, l'axe du boulon 71 étant parallèle à l'axe longitudinal de la charpente C. De par le déplacement de l'anneau 73, on pourra ainsi corriger la verticalité des cordelettes 9.

Afin d'obtenir une forme pratiquement arquée des rails 7, on prévoira que deux sections adjacentes disposées de part et d'autre d'une cordelette 9 fassent entre elles un angle d'envi-ron 150º.

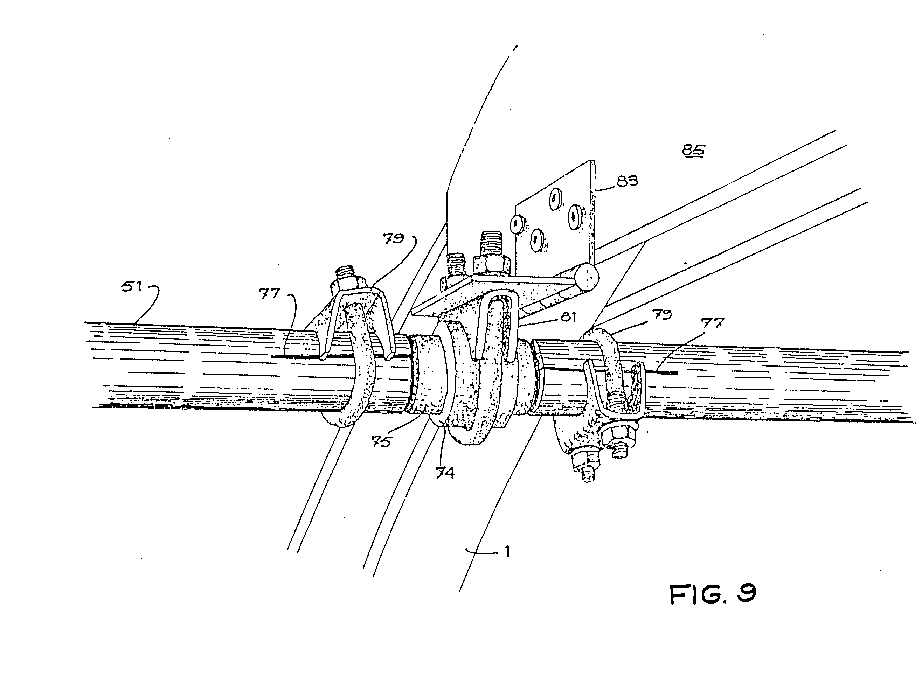

Dans le cas d'un toit de serre de grande dimension, il faudra songer à utiliser un arbre menant 51 en sections dont le nombre dépendra de la longueur totale de l'arbre et, évidemment, du diamètre et de la rigidité du matériau utilisé. Dans ces cas, on pourra utiliser, entre les sections d'arbres 51, un joint tel qu'illustré à la figure 9 destiné non seulement à relier deux sections adjacentes d'arbre mais aussi à supporter l'arbre aux arches 1 de la charpente externe.

Dans le cas illustré, le joint comprend un palier 74 en bronze dans lequel tourne un essieu court 75 ayant, à chaque extrémité, des prolongements (non illustrés) s'insérant à l'intérieur des extrémités creuses de deux sections adjacents d'arbre 51. Ces extrémités seront fendues dans le sens de la longueur des sections d'arbre 51 et de chaque côté de celles-ci de façon à pouvoir subir l'effet de serrement de pinces 79 de type connu.

On utilisera également une pince 81 du même genre pour le montage du palier 74 sur une branche horizontale d'une cornière 83 dont la branche verticale sera fixée à une plaque d'assise 85 formant partie intégrante de l'arche 1.

On peut ajouter en terminant les remarques suivantes :

Les rails7qui sont des câbles flexibles, sont peu encombrants et faciles à installer.

Dans des conditions de températures estivales extrêmes, on pourra substituer à la toile T (sections 55, 55'), un écran solaire qui permet de protéger les plantes d'un rayonnement trop intense et conserve la température de la serre dans des limites raisonnables.

Le câble 7 formant rails pourra être une corde de nylon tressée de 1.25 cm (1/2 pouce) de diamètre. Il en sera de même pour les cordelettes 9 suspendant les rails 7 sous la structure C, ces dernières pouvant avoir 1.6 mm (1/16") de diamètre.

La construction des poulies 3, 5 telle qu'illustrée à la figure 11 est particulièrement avantageuse en ce que la forme conique des réas 17 tend à replacer la barre de liaison 57 perpendiculairement aux rails 7 en cas de rotation horizontale accidentelle tout en permettant le passage des cordelettes 9 entre les réas 17 jusqu'à un angle de rotation de 10° environ.

Les roulements à billes 21 minimisent le frottement et facilitent l'entraînement de la corde de traction 43. Enfin l'étrier 11 de chaque poulie est très enveloppant et sans angles vifs éliminant ainsi les problèmes de coincement qui pourraient survenir.

La section 55 de toile T est une simple feuille de plastique transparente de préférence polyéthylène, utile le jour quand la température extérieure est basse. On peut alors conserver une température suffisante à l'intérieur de la serre sans une grande dépense d'énergie tout en assurant aux plantes la luminosité nécessaire.

A la suite de cette simple feuille de plastique transparente vient une couverture double constituée d'une feuille de polyéthylène surmontée d'une feuille de mylar aluminisé qui viendra prendre la place de la simple feuille précitée

10

de polyéthylène lorsque le mouvement d'entraînement décrit précédemment est poursuivi.

Pour que le toit d'abri selon l'invention ait sa pleine efficacité, il faudra que les extrémités soient également fermées. C'est pourquoi on prévoira des extrémités de serres qui seront parties intégrantes de la toile T et se déploieront avec elles. Ces bouts peuvent être installés en collant, à chaque extrémité de la salle, une seule pièce souple directement sur la toile T. On pourra également laisser dépasser la toile T à chaque extrémité. Les extrémités seront alors fermées à l'aide de quelques découpages et collages quand la partie de toile T concernée se trouve en position fermée.

Il est à noter que chaque extrémité du toit d'abri devra comporter quatre ouvertures fermables, deux pour la section de toile 55 et deux autres pour la section de toile 55' avec écran thermique. Les portes nécessaires pourront être réalisées simplement en fendant le bout concerné puis en équipant la fente ainsi créée de bandes velcro ou toute fermeture à glissière.

Il est bien entendu que l'on pourra utiliser tout moyen mécanique ou manuel d'entraînement en rotation de l'arbre 51, incorporant si nécessaire un réducteur de vitesse.

1

<u>REVENDICATIONS</u>

1. Toit d'abri comprenant une charpente externe (C) ayant deux assises latérales (A,A'), une toile (T) et des moyens pour suspendre la toile à la charpente externe, sous celle-ci, permettant de la déployer pour former un abri entre les deux assises à partir d'une position pliée de la toile à l'une des assises et permettant de la ramener dans ladite position pliée, caractérisé en ce qu'il comporte :

- au moins deux câbles parallèles (7) formant rails, disposés transversalement entre les deux assises (A,A') et des pièces allongées (9) fixées, à une extrémité, à la charpente externe (C) et, à l'autre extrémité, aux rails (7) de façon à les relier à la charpente tout en leur donnant la forme générale d'arches ;

- des poulies primaires (5) et secondaires (3) montées sur les rails (7) pour y rouler entre les assises (A,A'), chaque poulie (3,5) comportant deux cônes (17) rotatifs formant une gorge permettant aux cônes de reposer sur le rail respectif, un espace (19) étant prévu entre les cônes (17) pour le passage des pièces allongées (9) reliant les rails à la charpente externe (C) ; les poulies secondaires (3) comportant des moyens sous les rails (7), pour y fixer la toile (T) en des points répartis de celle-ci de façon à en permettre le déploiement et le pliage ;

- pour chaque rail, un câble de liaison (23) entraînant les poulies (3,5) et fixé, à une extrémité (25), à la charpente (C) du côté de l'autre assise (A') ; ce câble de traction (23) reliant entre elles les poulies (3,5) et sa longueur entre les poulies étant inférieure à la longueur de la toile entre les poulies de façon à ce que l'effort de traction, lorsque les poulies sont entraînées, soit absorbé par le câble de liaison ; les poulies primaires (5), en position pliée de la toile, étant distribuées le long des rails ;

- pour chaque rail, un dispositif de traction (43) apte à tirer les poulies en train, dans un sens ou dans l'autre, pour déployer ou plier la toile, et

0145508

2

- des moyens d'entraînement en synchronisme (51) desdits dispositifs de traction.

2. Toit d'abri selon la revendication 1, caractérisé en ce que chaque dispositif de traction (43) comporte :

- pour chaque poulie (3,5), une fourchette (39) ayant deux dents espacées, cette fourchette étant assujettie à la poulie correspondante ;

- une corde de traction (43) formant boucle et pourvue, à intervalles déterminés, de bourrelets d'accrochage (45) dont la largeur excède l'espace entre les dents, et

- un jeu de poulies (47) montées sur la charpente et disposées pour permettre le déroulage en boucle de la corde d'entraînement (43), la disposition desdites poulies permettant l'engagement, en position pliée de la toile, des fourchettes des seules poulies primaires (5).

3. Toit d'abri selon la revendication 2, caractérisé en ce que les moyens d'entraînement (51) en synchronisme des dispositifs de traction comportent :

- un arbre (51) menant disposé le long et au sommet de ladite charpente ;

- des poulies d'entraînement (49), une pour chaque dispositif de traction, montées sur ledit arbre pour y être amenées en rotation ; chaque poulie comportant une jante à gorge (52) dans laquelle la corde de traction (43) correspondante loge en cours de traction, la gorge (52) étant plus étroite que les bourrelets d'accrochage (45) et étant entrecoupée de décrochements formant deux rainures (53) diamétralement opposées destinées à emprisonner les bourrelets (45) pour amener le déplacement en boucle de la corde de traction (43) ; la distance entre les bourrelets étant égale à celle entre les rainures.

4. Toit d'abri selon la revendication 1, 2 ou 3, caractérisé en ce que les pièces allongées (9) reliant les rails à la charpente sont des cordelettes.

5. Toit d'abri selon la revendication 1, 2 ou 3, caractérisé en ce que la toile (T) est constituée de deux sections (55,55') reliées entre elles, chacune ayant une longueur apte à recouvrir entièrement ladite charpente ;

3

une première section (55) étant une feuille plastique transparente et une deuxième section (55') étant une feuille à
paroi double d'isolation, formant écran thermique.

6. Toit d'abri selon la revendication 5, caractérisé
en ce que une première paroi est une feuille en matériau plastique et une deuxième paroi, sousjacente, est une feuille en
matériau réflecteur.

7. Toit d'abri selon la revendication 1, 2 ou 3, caractérisé en ce que chacune des poulies secondaires (3) comportent
un étrier (11) formé de deux flasques (13) sur lesquels les
cônes rotatifs (17) sont montés et une base (15) reliant les
flasques, et caractérisé en ce que les moyens fixant la toile
(T) aux poulies (3) comportent des barres de liaison (57)
joignant les bases (15) des poulies secondaires (3) deux à
deux dont une sur chaque rail et un dispositif (59) de fixation
amovible de la toile auxdites barres.

8. Toit d'abri selon la revendication 1, 2 ou 3, caractérisé en ce que la charpente externe (C) est constituée de plusieurs arches (1) disposées parallèlement et à distances égales entre elles, chaque arche (1) supportant un rail (7) support de toile (T).

9. Toit d'abri selon la revendication 1, 2 ou 3, caractérisé en ce que la charpente externe (C) est constituée de plusieurs arches (1) disposées parallèlement et à distances égales entre elles, chaque arche (1) supportant un rail (7) support de toile (T), en ce que les pièces allongées (9) reliant
les rails (7) à la charpente (C) sont des cordelettes, et en
ce que chaque cordelette (9) est fixée à une desdites arches
(1) par l'intermédiaire d'une attache (69) comportant un boulon (71) rotatif manuellement, le long duquel axe peut se
déplacer un anneau (73) fileté intérieurement et pourvu d'une
jante rainurée autour de laquelle la cordelette respective
s'enroule, l'axe du boulon (71) étant parallèle à l'axe longitudinal de la charpente (C).

3

une première section (55) étant une feuille plastique transparente et une deuxième section (55') étant une feuille à paroi double d'isolation, formant écran thermique.

6. Toit d'abri selon la revendication 5, caractérisé en ce que une première paroi est une feuille en matériau plastique et une deuxième paroi, sousjacente, est une feuille en matériau réflecteur.

7. Toit d'abri selon la revendication 1, 2 ou 3, caractérisé en ce que chacune des poulies secondaires (3) comportent un étrier (11) formé de deux flasques (13) sur lesquels les cônes rotatifs (17) sont montés et une base (15) reliant les flasques, et caractérisé en ce que les moyens fixant la toile (T) aux poulies (3) comportent des barres de liaison (57) joignant les bases (15) des poulies secondaires (3) deux à deux dont une sur chaque rail et un dispositif (59) de fixation amovible de la toile auxdites barres.

8. Toit d'abri selon la revendication 1, 2 ou 3, caractérisé en ce que la charpente externe (C) est constituée de plusieurs arches (1) disposées parallèlement et à distances égales entre elles, chaque arche (1) supportant un rail (7) support de toile (T).

9. Toit d'abri selon la revendication 1, 2 ou 3, caractérisé en ce que la charpente externe (C) est constituée de plusieurs arches (1) disposées parallèlement et à distances égales entre elles, chaque arche (1) supportant un rail (7) support de toile (T), en ce que les pièces allongées (9) reliant les rails (7) à la charpente (C) sont des cordelettes, et en ce que chaque cordelette (9) est fixée à une desdites arches (1) par l'intermédiaire d'une attache (69) comportant un boulon (71) rotatif manuellement, le long duquel axe peut se déplacer un anneau (73) fileté intérieurement et pourvu d'une jante rainurée autour de laquelle la cordelette respective s'enroule, l'axe du boulon (71) étant parallèle à l'axe longitudinal de la charpente (C).

FIG. 1

FIG. 2

0145508

0145508

FIG. 3

FIG. 4

0145508

5/11

FIG. 5

0145508

FIG. 5

0145508

FIG. 6

0145508

FIG. 7

# FIG. 8

51

45

47

52

53

45

49

53

41

39

43

45

57

47

8/11

0145508

FIG. 9

0145508

FIG. 10

0145508

FIG. 11